# EUROPEAN PATENT SPECIFICATION

(11) **EP 2 543 501 B1**
(45) Date of publication and mention of the grant of the patent: **23.08.2017**
(21) Application number: 10846911.5
(22) Date of filing: 02.03.2010
(51) Int. Cl.: B29D 35/10, A43B 7/08, A43B 13/42, B29D 35/00, A43B 7/12, A43B 13/12, B29D 35/06, B29D 35/14

(54) **METHOD AND MOULD FOR PRODUCING FOOTWEAR AND FOOTWEAR THUS OBTAINED**
VERFAHREN UND FORM ZUR HERSTELLUNG VON SCHUHEN UND DAMIT HERGESTELLTE SCHUHE
PROCÉDÉ ET MOULE POUR LA FABRICATION DE CHAUSSURE ET CHAUSSURE AINSI OBTENUE

(43) Date of publication of application: 09.01.2013
(73) Proprietor: Desarrollo Integral Del Molde, S.L., 31013 Pamplona, Navarra (ES); Industrial Zapatera, S.A., 03360 Callosa de Segura, Alicante (ES); Plastinher, S.L., 03290 Elche, Alicante (ES)
(72) Inventor: IZQUIETA ANAUT , José María, 31002 Pamplona, Navarra (ES); PAJARES SALINAS , Ramón Baltasar, 03360 Callosa de Segura, Alicante (ES); URBAN BRU , Francisco Manuel, 03290 Elche, Alicante (ES)
(74) Representative: Capitán García, Maria Nuria
(86) International application number: PCT/ES2010/070111
(87) International publication number: WO 2011/107622

(56) References cited:
- EP-A1- 0 787 577
- EP-A1- 1 310 352
- WO-A1-2007/137604
- WO-A2-2005/070658
- CN-A- 1 453 122
- ES-A1- 2 262 443
- ES-T3- 2 142 620
- ES-T3- 2 243 377
- ES-T3- 2 252 130
- GB-A- 2 443 383
- JP-A- H01 171 502
- NL-C- 112 310
- US-A1- 2003 140 522
- US-A1- 2003 227 105
- US-A1- 2004 143 995

## Description

### OBJECT OF THE INVENTION

The present invention lies within the field of the methods of manufacturing shoes in which a material is injected to obtain the finished shoe, the mould used and the shoe thus obtained.

Said invention is a method of injection in which a material is injected which serves as the connection between the upper and the sole of the shoe, the mould used for this purpose and the shoe thus obtained in such a manner that the breathable membranes incorporated in said shoe are not damaged.

### ANTECEDENTS OF THE INVENTION

Methods, moulds and shoes obtained by means of injecting a material which serves as a connection between the upper and the sole of the shoe are of prior art.

Said methods, moulds and shoes inject the material onto the sealed upper and sole, i.e. the material is injected onto a fully closed cavity bounded by parts of the aforementioned mould, upper and sole.

Current trends make it necessary for the shoe to include elements which improve comfort, such as breathable elements. This necessitates perforating the soles and other elements of the shoe, or at least ensuring that they exhibit a greater or lesser degree of porosity.

Therefore the methods, moulds and shoes obtained by means of the inventions of prior art suffer from the disadvantage that they do not include the breathable elements which the current trends in the market require, since said elements, due to their porosity and therefore their non-tight nature, allow the passage of the injected material through them, which means that their orifices or pores are closed and their breathability is unused.

WO 2007/137604 discloses a method for manufacturing a shoe which places the means of breathing and damping in the upper part of the sole, the upper between the rings of the mould, closed in order to fix the upper, presses said means against the external lower face of the upper, injects material in the space between the upper, the means and the rings, opens to release the upper, and removes the shoe thus formed. The (out) sole, tread, needs to be glued to the injected midsole in a further step. Also discloses the shoe formed comprising a sole comprising a breathable and impermeable membrane which is visible through windows, perforations, in the sole, breathing and damping means located between the outer lower face of the upper and the inner face of the sole and in the space bounded by the lip of the sole, and injected material serving as the connection between the upper, the sole and the breathing and damping means.

NL 112 310 C discloses a mould suitable for manufacturing a shoe, which comprises rings for fixing the upper, which are the two halves of a ring split in the regions of the tip and heel of the shoe, plunger suitable to be used with the tread of the sole (the tread is not a part of the mould), which it will receive, with a relative movement of translation along the inner surface of the rings.

### DESCRIPTION OF THE INVENTION

In the light of the above, the present invention relates to a method for manufacturing shoes comprising a sole and an upper, such method comprises the following steps:
- providing a mould comprising a mould plunger and rings;
- placing a sole on the mould plunger, the sole comprises a breathable, impermeable membrane which is visible through windows in the sole, and said sole also comprises a lip on its upper surface,
- placing means of breathing and damping in the upper part of the sole and in the space bounded by the lip, in such a way that the lip is able as positioner of said means inside the mould,
- placing the upper between the rings of the mould
- closing the rings of the mould in order to fix the upper,
- moving the plunger towards the rings so that the breathing and damping means are pressed against the external lower face of the upper,
- injecting material in the space between the upper, the breathing and damping means, the sole and the rings, in such a way that the lip is able to serve as a barrier to protect the breathing and damping means, and also to serve as a fixer of the position of said means thus preventing moving them,
- opening the rings of the mould to release the upper,
- removing the shoe thus formed.

### BRIEF DESCRIPTION OF THE FIGURES

This specification is supplemented by a set of figures illustrating the preferred embodiment, which is by no means exhaustive, of the invention.

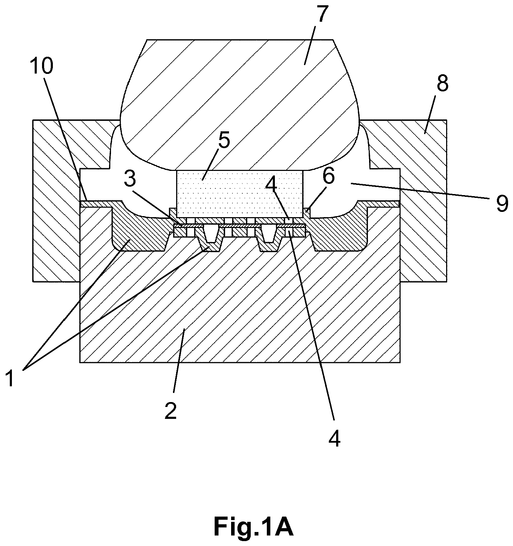

Figure 1A shows a transverse section of the mould and the shoe before the mould is closed.

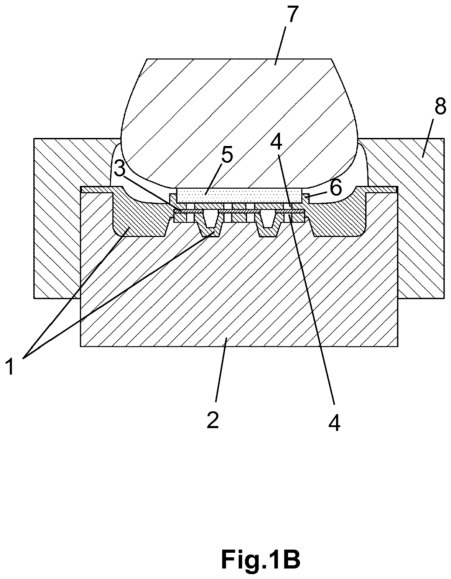

Figure 1B shows a transverse section of the mould and the shoe with the mould closed.

### DETAILED DESCRIPTION OF THE INVENTION

The invention is described in detail below, so that when "lower" and "upper" are mentioned, this refers to locations where the shoe is placed in its position of use, i.e. the sole (1) supported on the ground; when "inner" and "outer" are mentioned, this is equally from the perspective of the user of the shoe, i.e. "inner" is towards the inside of the shoe and is therefore concealed from the user, and "outer" is towards the outside or outside the shoe.

The method for manufacturing shoes comprising a sole (1) and an upper (7) according to a preferred embodiment comprises the following steps:
- providing a mould comprising a mould plunger (2) and rings (8);
- placing the sole (1) on the plunger (2) of the mould,
- placing the breathing and damping means (5) in the upper part of the sole (1) and in the space bounded by a lip (6),
- placing the upper (7) between the rings (8) of the mould,
- closing of the rings (8) of the mould for fixing the upper (7),
- moving the plunger (2) towards the rings (8) so that the breathing and damping means (5) are pressed against the outer lower face of the upper (7),
- injection of material in the space (9) between the upper (7), the breathing and breathing means (5), the sole (1) and the rings (8),
- opening of the rings (8) of the mould to release the upper (7),
- removal of the shoe thus formed.

In an embodiment of the invention the breathing and breathing means (5), before the mould is closed, have the thickness sufficient for its upper surface to make contact with the upper (7). Thus when the plunger (2) moves to close the mould, said breathing and damping means (5) are pressed against the upper (7), creating a barrier against the injected plastic.

In another embodiment not shown the breathing and damping means (5) would not have the aforementioned thickness, i.e. before the mould is closed they would come into contact with the upper (7) because at the upper level of material injected during closing of the mould it would never project from the upper surface of the breathing and damping means (5), and the injected plastic would never project above them.

The aforementioned elements, corresponding to parts of the mould, are those of prior art, more specifically in methods known as injection to the upper (7).

Therefore the plunger (2) is a moving part of the mould in which the sole (1) is placed.

The rings (8) of the mould which secure the upper (7) of the shoe are named as such and are known in this form in the state of the art, although strictly speaking they are two half-rings (8) which are formed by splitting a ring which runs around the entire periphery of the upper (7). Normally, and in this preferred embodiment, the splitting is effected in the region of the tip and in the region of the heel of the shoe.

The aforementioned sole (1) comprises in turn a breathable, permeable membrane (3) which is visible through windows (4) in the sole (1), as shown in the Spanish patent of one of the applicants under application number 200600272.

The breathing and damping means (5) may consist of a block of breathable, compressible, spongy material, or may consist of a compressible material with orifices not shown in the figures, which favour breathing.

In the latter case said orifices of the breathing and damping means (5) coincide with the orifices of the sole (1), thereby creating a direct channel from the inside of the sole (1) to the outside of the shoe to allow discharge of sweat via said channel.

The damping characteristic of these means implies that the same have a recuperation memory to ensure that said characteristic is repeated for each footprint.

Both the breathable and impermeable membrane (3) and the breathing and damping means (5) may be placed on a shoe in one more regions, for example, some in the heel and others in the central region, and they may also be duplicated, tripled etc. in the same shoe, for example there may be two in the front section of the shoe, another around the tip and then another toward the central section of the shoe.

During walking the compression of the breathing and damping means (5) act as an impeller pump for perspiration, which as has just been mentioned, will pass directly to the outside of the shoe for its expulsion.

Thanks to the characteristics of the components of the shoe, specifically the membrane (3) and breathing and damping means (5), the perspiration can pass from the inside to the outside of the shoe, but conversely the water cannot enter from the outside to the inside of the shoe, which would invalidate the comfort of the user due to perspiration.

The sole (1) has a lip (6) or partition wall on its upper surface so that this lip (6) performs the following functions:
- on the one hand it serves as a barrier against the injected plastic to protect the breathing and damping means (5) of the shoe and the pressure of said plastic;
- on the other hand it serves as a positioner of said breathing and damping means (5) on the sole (1) at the time placing both, the sole (1) and means(5), inside the mould;
- and finally it serves as a fixer of the position of said breathing and damping means (5), thus preventing the pressure of the injected plastic from moving them.

Said sole is also provided with an optional tab (10) on its outermost peripheral edge which favours the closing of the sole (1) with the mould and which is cut once the shoe is formed, i.e. it terminates the injection of the material.

By means of the method mentioned, and using the mould also mentioned here, a shoe is obtained which includes a sole (1), with a breathable and impermeable membrane (3), the upper (7), breathing and damping means (5) and a material connecting all the aforementioned elements.

It should be emphasised that the shoe thus obtained is fully completed and no subsequent operation is required to obtain a fully finished shoe ready for use.

Similarly, the invention described is applicable to all styles or classes of shoes: safety, casual or dress, girl's or boy's shoes, mountaineering, orthopaedic, sports, anatomical, ski or pre-ski shoes, etc.

## Claims

1. A method for manufacturing a shoe comprising a sole (1) and an upper (7), such method comprises the following steps:
- providing a mould comprising a mould plunger (2) and rings (8);
- placing a sole (1) on the mould plunger (2), the sole (1) comprises a breathable, impermeable membrane (3) which is visible through windows (4) in the sole (1), and said sole (1) also comprises a lip (6) on its upper surface;
- placing means of breathing and damping (5) in the upper part of the sole (1) and in the space bounded by the lip (6), in such a way that the lip (6) is able as positioner of said means (5) inside the mould,
- placing the upper (7) between the rings (8) of the mould,
- closing the rings (8) of the mould in order to fix the upper (7),
- moving the plunger (2) towards the rings (8) so that the breathing and damping means (5) are pressed against the external lower face of the upper (7),
- injecting material in the space (9) between the upper (7), the breathing and damping means (5), the sole (1) and the rings (8), in such a way that the lip (6) is able to serve as a barrier to protect the breathing and damping means (5), and also to serve as a fixer of the position of said means (5) thus preventing moving them,
- opening the rings (8) of the mould to release the upper (7),
- removing the shoe thus formed.

2. The method for manufacturing a shoe according to claim 1, **characterised in that** the material is injected before the plunger (2) is moved towards the rings (8).

3. The method for manufacturing a shoe according to claim 1, **characterised in that** after the shoe is removed an optional tab (10) of the sole (1) is cut.

4. The method for manufacturing a shoe according to claim 1, **characterised in that** the material injected is polyurethane or injectable thermoplastic, polyvinyl chloride or rubber.

## Patentansprüche

1. Verfahren zur Herstellung eines Schuhs, umfassend eine Sohle (1) und ein Oberteil (7), wobei das Verfahren die folgenden Schritte umfasst:
- Bereitstellen einer Form, die einen Formstempel (2) und Ringe (8) umfasst;
- Platzieren einer Sohle (1) auf dem Formstempel (2), wobei die Sohle (1) eine atmungsaktive, undurchlässige Membran (3) umfasst, die durch Fenster (4) in der Sohle (1) sichtbar ist, und die Sohle (1) auch eine Lippe (6) auf ihrer oberen Fläche umfasst;
- Platzieren von Mitteln zur Atmung und Dämpfung (5) in dem oberen Teil der Sohle (1) und in dem von der Lippe (6) begrenzten Raum, derart, dass die Lippe (6) in der Lage ist, als Positioniervorrichtung der Mittel (5) im Inneren der Form zu dienen,
- Platzieren des Oberteils (7) zwischen den Ringen (8) der Form,
- Schließen der Ringe (8) der Form, um das Oberteil (7) zu fixieren,
- Bewegen des Stempels (2) in Richtung der Ringe (8), so dass die Atmungs- und Dämpfungsmittel (5) gegen die äußere Unterseite des Oberteils (7) gepresst werden,
- Einspritzen von Material in den Raum (9) zwischen dem Oberteil (7), den Atmungs- und Dämpfungsmitteln (5), der Sohle (1) und den Ringen (8), derart, dass die Lippe (6) in der Lage ist, als Schranke zu dienen, um die Atmungs- und Dämpfungsmittel (5) zu schützen, und auch um als Fixiervorrichtung für die Position der Mittel (5) zu dienen, wodurch ein Bewegen derselben verhindert wird,
- Öffnen der Ringe (8) der Form, um das Oberteil (7) freizugeben,
- Entfernen des somit gebildeten Schuhs.

2. Verfahren zur Herstellung eines Schuhs nach Anspruch 1, **dadurch gekennzeichnet, dass** das Material eingespritzt wird, bevor der Stempel (2) in Richtung der Ringe (8) bewegt wird.

3. Verfahren zur Herstellung eines Schuhs nach Anspruch 1, **dadurch gekennzeichnet, dass** nach der Entfernung des Schuhs eine optionale Lasche (10) der Sohle (1) geschnitten wird.

4. Verfahren zur Herstellung eines Schuhs nach Anspruch 1, **dadurch gekennzeichnet, dass** das eingespritzte Material Polyurethan oder einspritzbares/r Thermoplast, Polyvinylchlorid oder Kautschuk ist.

## Revendications

1. Procédé permettant de fabriquer une chaussure comprenant une semelle (1) et une tige (7), ledit procédé comprenant les étapes suivantes :
- fournir un moule comprenant un piston (2) de moule et des anneaux (8) ;
- placer une semelle (1) sur le piston (2) de moule, la semelle (1) comprenant une membrane respirante et imperméable (3) visible à travers une fenêtre traversante (4) dans la semelle (1), et ladite semelle (1) comprenant également une lèvre (6) sur sa surface supérieure ;
- placer des moyens de respiration et d'amortissement (5) dans la partie supérieure de la semelle (1) et dans l'espace lié par la lèvre (6), de sorte que la lèvre (6) serve d'élément de positionnement desdits moyens (5) à l'intérieur du moule,
- placer la tige (7) entre les anneaux (8) du moule,
- fermer les anneaux (8) du moule dans le but de fixer la tige (7),
- déplacer le piston (2) vers les anneaux (8) de sorte que les moyens de respiration et d'amortissement (5) soient appuyés contre la face inférieure externe de la tige (7),
- injecter un matériau dans l'espace (9) compris entre la tige (7), les moyens de respiration et d'amortissement (5), la semelle (1) et les anneaux (8), de sorte que la lèvre (6) puisse servir de barrière pour protéger les moyens de respiration et d'amortissement (5), et également servir d'élément de fixation de la position desdits moyens (5) évitant ainsi leur déplacement,
- ouvrir les anneaux (8) du moule dans le but de libérer la tige (7),
- retirer la chaussure ainsi formée.

2. Procédé permettant de fabriquer une chaussure selon la revendication 1, **caractérisé en ce que** le matériau est injecté avant que le piston (2) soit déplacé vers les anneaux (8).

3. Procédé permettant de fabriquer une chaussure selon la revendication 1, **caractérisé en ce que**, une fois que la chaussure est retirée, une languette facultative (10) de la semelle (1) est coupée.

4. Procédé permettant de fabriquer une chaussure selon la revendication 1, **caractérisé en ce que** le matériau injecté est du polyuréthane ou du thermoplastique injectable, du polychlorure de vinyle ou du caoutchouc.
